# EUROPÄISCHE PATENTSCHRIFT

(11) **EP 3 757 553 B1**
(45) Veröffentlichungstag und Bekanntmachung des Hinweises auf die Patenterteilung: **30.07.2025**
(21) Anmeldenummer: 20181921.6
(22) Anmeldetag: 24.06.2020
(51) Int. Cl.: G01N 21/90

(54) **VORRICHTUNG ZUR OPTISCHEN INSPEKTION VON LEEREN UND MIT FLÜSSIGKEIT GEFÜLLTEN BEHÄLTERN**
DEVICE FOR OPTICALLY INSPECTING EMPTY CONTAINERS AND CONTAINERS FILLED WITH LIQUID
DISPOSITIF D'INSPECTION OPTIQUE DES RÉCIPIENTS VIDES ET REMPLIS DE LIQUIDE

(30) Priorität: 26.06.2019 DE 102019117260
(43) Veröffentlichungstag der Anmeldung: 30.12.2020
(73) Patentinhaber: Körber Pharma Inspection GmbH, 85570 Markt Schwaben (DE)
(72) Erfinder: Knülle, Dr. Matthias, 85617 Aßling / OT Loitersdorf (DE)
(74) Vertreter: Laufhütte, Dieter

(56) Entgegenhaltungen:
- EP-A1- 0 429 086
- EP-A1- 0 742 432
- WO-A1-2014/032744
- DE-B3- 102017 120 376
- DE-T2- 69 008 676
- US-A- 3 027 798

## Beschreibung

Die vorliegende Erfindung betrifft eine Vorrichtung zur optischen Inspektion eines leeren oder mit Flüssigkeit gefüllten Behälters nach dem Oberbegriff des Anspruchs 1.

Vollautomatische optische Inspektionssysteme werden in einer Vielzahl von technischen Bereichen wie beispielsweise der pharmazeutischen Industrie, der Getränkeindustrie oder auch der Halbleiterindustrie eingesetzt, um fehlerhafte Produkte zu erkennen und sie aus den weiteren Produktionsprozessen auszuschließen. Gattungsgemäße Inspektionsvorrichtungen weisen typischerweise eine Lichtquelle zur Beleuchtung des zu inspizierenden Behälters sowie eine Kamera zur Aufnahme einer Abbildung des Behälters auf.

Bei den Beleuchtungen derartiger Inspektionssystemen kommen häufig Linsen-Kollimatoren zum Einsatz, welche jedoch anfällig für Bildfehler sind und bei einem begrenzten Einbauraum einen zur Faltung des Strahlengangs notwendigen komplexen Aufbau der Inspektionsvorrichtung erfordern. Ferner sind bei solchen optischen Systemen typischerweise die maximal erreichbaren Aperturen begrenzt, was sich negativ auf die gleichmäßige Ausleuchtung der zu inspizierenden Behälter auswirkt, insbesondere bei bewegten Behältern, die an mehreren Positionen der Bewegungsbahn ausgeleuchtet und abgebildet werden sollen.

Darüber hinaus können bei gattungsgemäßen Inspektionssystemen die optischen Effekte von in den Behältern enthaltenen Flüssigkeiten nur unter Einsatz komplizierter und kostenaufwändiger Optiken berücksichtigt werden, was für akkurate Inspektionsergebnisse jedoch unerlässlich ist.

Das Dokument DE 690 08 676 T2 offenbart eine Vorrichtung zum Untersuchen von Glasflaschen mit einer Beleuchtungseinrichtung und einer Videokamera, wobei ein gekrümmter Sammelspiegel zwischen der Beleuchtungseinrichtung und der Glasflasche angeordnet ist.

Vor diesem Hintergrund liegt der vorliegenden Erfindung die Aufgabe zugrunde, eine Vorrichtung zur optischen Inspektion von Behältern bereitzustellen, welche einen einfachen und kostengünstigen Aufbau aufweist und eine Inspektion von leeren sowie mit einer Flüssigkeit gefüllten Behältern mit einer optimalen Ausleuchtung ermöglicht.

Erfindungsgemäß wird diese Aufgabe durch eine Vorrichtung mit den Merkmalen des Anspruchs 1 gelöst. Demnach umfasst die erfindungsgemäße Vorrichtung zur optischen Inspektion eines leeren oder mit Flüssigkeit gefüllten Behälters eine Beleuchtungseinheit und eine Aufnahmeeinrichtung. Die Beleuchtungseinheit umfasst eine Leuchtfläche, mittels welcher ein flächiges Lichtmuster bestehend aus mindestens zwei Bereichen unterschiedlicher Lichtintensitäten erzeugbar und der Behälter mit Licht des Lichtmusters bestrahlbar, insbesondere durchleuchtbar ist. Das Lichtmuster ist flächig, besitzt also eine gewisse von der Aufnahmeeinrichtung aus gesehen zweidimensionale Ausdehnung und ist nicht lediglich eine punktförmige Lichtquelle.

Erfindungsgemäß ist ferner ein im Strahlengang zwischen Beleuchtungseinheit und Behälter angeordnetes Spiegelsystem vorgesehen, welches mindestens einen konkaven Spiegel umfasst. Das Spiegelsystem bildet dabei das durch die Beleuchtungseinheit erzeugte Lichtmuster auf die Ebene der Eintrittspupille der Aufnahmeeinrichtung ab.

Durch das Spiegelsystem wird das Licht der Beleuchtungseinheit in Richtung Behälter und Aufnahmeeinrichtung gelenkt. Das Spiegelsystem hat für das Licht folglich die Funktion einer "Feldlinse", wodurch die Lichtausbeute wesentlich erhöht wird. Ferner wird der Strahlengang durch das Spiegelsystem auf natürliche Weise "gefaltet", sodass ein sehr kompakter Aufbau der erfindungsgemäßen Vorrichtung möglich ist. Sind noch kompaktere Anordnungen notwendig, kann der Strahlengang durch zusätzliche Spiegel gefaltet werden. Im einfachsten Fall kann hierzu ein zusätzlicher Planspiegel eingesetzt werden, aber auch die Kombination von Spiegeln beliebiger Form ist denkbar.

Das Spiegelsystem ist so ausgestaltet (d.h. bei einem 1-Spiegelsystem ist die Spiegeloberfläche des einzigen konkaven Spiegels so geformt), dass die Ebene des durch die Leuchtfläche erzeugten Lichtmusters (= Objektebene) auf die Ebene der Eintrittspupille der Aufnahmeeinrichtung abgebildet wird und fungiert folglich als Kollimator. Somit erhält man in der Ebene der Eintrittspupille (= Bildebene) ein Abbild des Lichtmusters. Dadurch werden auf dem durch die Aufnahmeeinrichtung aufgenommenen Bild eventuell vorhandene Inhomogenitäten der Beleuchtung (z.B. Staub oder andere Verschmutzungen, aber auch bewusst mittels des Lichtmusters eingeführte Intensitätsgradienten oder -muster) nicht sichtbar.

Die optische Abbildung auf die Ebene der Eintrittspupille bedingt, dass die Aufnahmeeinrichtung im gesamten Bildfeld die nahezu gleichen Beleuchtungsverhältnisse sieht. Dies ist insbesondere bei bewegten Behältern von Bedeutung, da in diesem Fall mehrere Aufnahmen gemacht werden, während sich der Behälter im Bildfeld der Aufnahmeeinrichtung bewegt, wobei die Beleuchtungsverhältnisse für ein akkurates Inspektionsergebnis gleich bleiben müssen.

Ein weiterer Vorteil des als Kollimator fungierenden Spiegelsystems besteht darin, dass durch unterschiedliche Lichtmuster der Charakter der Beleuchtung der jeweiligen Applikation in weiten Bereichen angepasst werden kann, ohne dass das Lichtmuster selbst im Bildfeld der Aufnahmeeinrichtung sichtbar wird. Insbesondere bei bewegten Behältern kann somit auch die Bewegung des Behälters sowie, bei Vorhandensein einer Flüssigkeit im Behälter, die hohe Brechkraft der Flüssigkeitssäule berücksichtigt werden. Dies ist mit einem Hintergrundlicht alleine nicht darstellbar.

Je nach Anwendung können von den Ideal-Positionen abweichende Abstände zwischen Leuchtfläche und Spiegelsystem bzw. Spiegelsystem und Aufnahmeeinrichtung toleriert werden. Unterschiedliche Abstände zwischen Behälter und Aufnahmeeinrichtung können durch ein "Nachfokussieren" des Abstandes zwischen Leuchtfläche und Spiegelsystem in einem gewissen Bereich korrigiert werden, ohne dass eine andere Ausgestaltung des Spiegelsystems notwendig wird, da die theoretisch fehlerfreie Abbildung des Lichtmusters auf der optischen Achse der Aufnahmeeinrichtung nicht notwendig und im Feld auch nicht erreichbar ist.

Der Begriff "Licht" ist vorliegend nicht auf sichtbares Licht beschränkt, sondern umfasst generell elektromagnetische Strahlung beliebiger Wellenlängen wie beispielsweise UV-, Röntgen- und Infrarotstrahlung und sichtbares Licht.

Vorteilhafte Ausführungsformen der Erfindung ergeben sich aus den Unteransprüchen und der nachfolgenden Beschreibung.

In einer Ausführungsform ist vorgesehen, dass das Spiegelsystem keine Linse umfasst. Ferner kann vorgesehen sein, dass die gesamte Vorrichtung keine Linsen umfasst.

Ein rein auf Spiegeln aufbauender Kollimator weist zahlreiche Vorteile gegenüber einem auf Linsen basierenden System auf. So stellt der begrenzte Einbauraum in einer typischen Inspektionsvorrichtung ein Problem dar, da er kurze Distanzen und somit kurze Brennweiten bedingt. Um die notwendige hohe Gesamtbrechkraft zu erreichen, sind in der Regel zwei asphärische Linsen notwendig. Die Brechkräfte, die mit einer einzelnen Linse erreichbar sind, machen daher typischerweise die Faltung des Strahlengangs mit einem Planspiegel notwendig.

Um bei bewegten Behältern für den gesamten Verfahrbereich die volle bzw. eine gleichmäßige Ausleuchtung zu garantieren, müssen ferner die Linsen ausreichend groß dimensioniert sein. Die benötigten Durchmesser und Brechkräfte lassen sich mit kostengünstigen Materialien wie PMMA kaum erreichen, sodass hochbrechende Gläser notwendig sind.

Darüber hinaus ist ein Spiegelsystem einfacher und kostengünstiger herzustellen, als ein auf Linsen basierender Kollimator. Während beispielsweise bei einem 1-Spiegelsystem nur eine optische Fläche hergestellt werden muss, sind es bei einem 2-Linsensystem bereits 4 Flächen. Um Streulicht und Geisterbilder zu vermeiden, müssen alle Glasflächen optisch auspoliert werden und über eine hochwertige Antireflex-Vergütung verfügen.

Ferner scheidet eine Korrektur des Farbfehlers eines Linsenkollimators auf Grund der hierzu notwendigen Linse mit negativer Brechkraft und der damit verbundenen Verlängerung der Systembrennweite aus. Spiegel weisen dagegen keine Farbfehler auf.

Schließlich bedingt die bei einem Linsensystem geringere Distanz der Behälterseitigen Glas-Luft-Fläche, dass Verschmutzungen (z.B. Staub) auf dieser Fläche aufgrund der Schärfentiefe der auf den Behälter fokussierten Aufnahmeeinrichtung im Bild sichtbar werden und das Inspektionsergebnis negativ beeinflussen können.

Somit hat ein auf Linsen basierender Kollimator erhebliche Nachteile:
- Wesentlich höhere Kosten auf Grund des Materials (hochbrechende Gläser), der Anzahl der optischen Flächen und der erforderlichen Antireflex-Vergütung.
- Auch mit hochbrechenden Gläsern sind die erreichbaren Aperturen begrenzt, sodass nachteilige Kompromisse bei der Ausleuchtung der Behälter gemacht werden müssen.
- Trotz Vergütung führt Staub nicht nur zur Streulicht, sondern kann auch direkt im Bild sichtbar werden und zu Fehlinspektionen führen, da die Abstände vom Behälter zu den Linsenflächen geringer sind als der Abstand zu einem schräg angeordneten Spiegel.
- Trotz Vergütung besteht die Gefahr von schwachen Geisterbildern, hervorgerufen durch Reflexionen an den sehr angespannten, d.h. stark gekrümmten Flächen der Linsen, die zu fehlerhaften Inspektionsergebnissen führen können.
- Die fehlende Farbkorrektur der Linsen bedeutet, dass das Lichtmuster nur für eine Farbe bzw. Wellenlänge scharf auf die Ebene der Eintrittspupille abgebildet wird, für alle anderen Wellenlängen jedoch eine unscharfe Abbildung erfolgt. Dies führt zu einem farbigen Lichtuntergrund, der sich auch bei einer Schwarz-Weiß-Kamera wie ein Streulicht-Untergrund bemerkbar macht und den Kontrast der Abbildung erheblich reduzieren kann.
- Für sehr kompakte Aufbauten kann ein zusätzlicher Spiegel zur Faltung notwendig werden, was die Kosten weiter erhöht.
- Kostengünstige Kunststoffe (z.B. PMMA) sind mit Abstrichen bei der Ausleuchtung (z.B. kleinere Linsendurchmesser) einsetzbar. Es besteht aber keine Möglichkeit der nachträglichen Vergütung, woraus sich Nachteile in Bezug auf Geisterbilder und Streulicht ergeben.

Die zuvor beschriebenen Nachteile eines Linsensystems entsprechen genau den Vorteilen des erfindungsgemäßen Spiegelsystems:
- Der / die Spiegel sorgen für eine farbreine Abbildung, d.h. es ergeben sich kein farbiger "Streulichtuntergrund" und keine Farbsäume an den Hell-Dunkel-Übergängen im Bild.
- Störende Reflexe und "Geisterbilder" werden vermieden.
- Die Abbildung und Strahlumlenkung kann über eine gemeinsame Spiegelfläche realisiert werden. Man erhält so ohne zusätzliche Elemente einen kompakten Strahlengang, der für den Einbau in Inspektionsmaschinen generell von großem Vorteil ist.
- Ein 1-Spiegelsystem mit nur einer optischen Fläche genügt für viele Anwendungen, wodurch sich ein enormer Kostenvorteil ergibt.
- Bereits mit einem 1-Spiegelsystem können bei gleichzeitig vertretbaren Kosten wesentlich größere Aperturen als mit Linsen realisiert werden, was eine bessere Ausleuchtung der Behälter ermöglicht. Dies ist insbesondere auch für die Partikelinspektion wichtig.
- Mit Hilfe von 2-Spiegel- und Multi-Spiegelsystemen kann die Inspektionsvorrichtung noch kompakter gestaltet und noch extremere Strahlenverläufe realisiert werden.
- Bei Spiegeln sind die Anforderungen an die Güte der Politur niedriger als bei Linsen; sie muss lediglich gleichmäßig ausgeführt werden.
- Der größere Abstand der Spiegelfläche zum Behälter garantiert, dass diese auch bei kleinen Blenden, d.h. einer höheren Schärfentiefe der Aufnahmeeinrichtung nicht scharf abgebildet wird. Staub und Verschmutzungen auf dem Spiegel werden daher im Bild nicht sichtbar.
- Sind optionale Schutzscheiben zwischen Spiegelsystem und Behälter zum Schutz des / der Spiegel gewünscht, so ist eine Abbildung des Staubes wieder möglich. Entsprechende Scheiben mit sehr hochwertigen Vergütungen sind aber als Massenware vergleichsweise kostengünstig verfügbar. Sie können sehr viel einfacher gereinigt und im Fall von Beschädigungen (z.B. Kratzer) ohne hohen Kostenaufwand auch getauscht werden. Allerdings empfiehlt sich häufig auch bei einem Linsensystem das Vorsehen eines Schutzglases, da es beim Einrichten der Maschinen zum Bruch der Behälter (z.B. Glasbruch) kommen kann.

Vorzugsweise umfasst das Spiegelsystem einen oder - falls notwendig - zwei oder mehrere sphärische und/oder asphärische Spiegel (deren Spiegeloberflächen insbesondere Kegelschnitten entsprechen). Das Design der Spiegeloptik ist insbesondere auf die Positionen von Aufnahmeeinrichtung und Beleuchtungseinheit abgestimmt. Bei mehr als einem Spiegel kann das Spiegelsystem auch einen oder mehrere plane Spiegel zur Strahlumlenkung umfassen.

Gemäß der Erfindung ist vorgesehen, dass der konkave Spiegel eine ellipsoide Spiegeloberfläche aufweist und so angeordnet ist, dass einer der Brennpunkte des die Spiegeloberfläche definierenden Ellipsoids auf dem Lichtmuster und der andere Brennpunkt auf der Ebene der Eintrittspupille der Aufnahmeeinrichtung liegt. Die Spiegeloberfläche des konkaven Spiegels ist somit vorzugweise ein Ausschnitt aus einem Rotationsellipsoid. Bei geringen Anforderungen an die Inspektionsvorrichtung können allerdings auch einfachere Spiegel-Formen zum Einsatz kommen.

In einer weiteren Ausführungsform ist vorgesehen, dass der Ablenkwinkel bzw. Umlenkwinkel des konkaven Spiegels kleiner als 135°, vorzugsweise kleiner als 100° ist. Weiter vorzugsweise ist der Ablenkwinkel größer als 30 °. Der Ablenkwinkel ist hierbei definiert als der Winkel zwischen der gedachten Verlängerung der optischen Achse vor Auftreffen auf den Spiegel und der durch den Spiegel abgelenkten optischen Achse. Eine vollständige Rückreflexion entspräche also einem Ablenkwinkel von 180°.

Dies gilt entsprechend bei einem Multi-Spiegelsystem, also für den Fall, dass das Spiegelsystem mehrere Spiegel umfasst, vorzugsweise für alle Spiegel. Es findet im Spiegelsystem also vorzugsweise generell keine Rückreflexion statt. Bei einem Ablenkwinkel von 180°, d.h. einer Rückreflexion in Richtung Aufnahmeeinrichtung, könnte im Bereich der Aufnahmeeinrichtung beispielsweise keine Lichtquelle platziert werden. Die Leuchtfläche der Beleuchtungseinheit wäre an dieser Stelle unterbrochen, was z.B. eine Hellfeldbeleuchtung unmöglich macht.

In einer weiteren Ausführungsform ist vorgesehen, dass mittels der Beleuchtungseinheit eine Hellfeldbeleuchtung und/oder eine Dunkelfeldbeleuchtung und/oder eine kombinierte Hell- und Dunkelfeldbeleuchtung mit unterschiedlichen Wellenlängen für die Hellfeld- und die Dunkelfeldbestrahlung realisierbar ist. Welche Beleuchtung zum Einsatz kommt lässt sich durch die Erzeugung eines entsprechenden Lichtmusters durch die Beleuchtungseinheit einstellen. Damit bietet die erfindungsgemäße Vorrichtung eine große Flexibilität bei der Inspektion der Behälter. Der Begriff Wellenlänge steht hierbei für eine definierte Wellenlänge oder für einen bestimmten Wellenlängenbereich. In letzterem Fall unterscheiden sich also die Wellenlängenbereiche bzw. Spektralbereiche der für die Hellfeld- und Dunkelfeldbeleuchtung eingesetzten Beleuchtungsbereiche bzw. Leuchtflächen der Beleuchtungseinheit.

Bei einer Hellfeldbeleuchtung wird idealerweise nur derjenige Teil der Leuchtfläche zur Bestrahlung des Behälters verwendet, welcher unter der Annahme eines ungestörten Strahlengangs (was in guter Näherung auch bei einem defektfreien leeren Behälter erfüllt ist) in die Eintrittspupille der Aufnahmeeinrichtung abgebildet wird. So kann bei einer Leuchtfläche deren Abbildung eine größere Ausdehnung hat als die Eintrittspupille, für eine reine Hellfeldbeleuchtung (d.h. "hartes" kollimiertes Licht) nur der zentrale Bereich der Leuchtfläche genutzt werden, deren Licht in die Eintrittspupille gelangt. Die restliche Fläche der Leuchtfläche wird abgedunkelt oder geblockt. Bei einer kreisförmigen Eintrittspupille (beispielsweise definiert durch eine kreisförmige Aperturblende) wird also nur ein zentraler kreisförmiger Bereich der Leuchtfläche zur Beleuchtung des Behälters genutzt.

Für eine reine Dunkelfeldbeleuchtung kann die gesamte Fläche der Leuchtfläche genutzt und der zuvor beschriebene zentrale Bereich abgedunkelt werden (bei einer kreisförmigen Eintrittspupille also der zentrale kreisförmige Bereich der Leuchtfläche).

Das Zentrum der Leuchtfläche ist vorliegend definiert als der Durchstoßpunkt der durch das Spiegelsystem umgelenkten optischen Achse der Aufnahmeeinrichtung (d.h. falls diese ein Objektiv umfasst, der optischen Achse des Objektivs).

Um auch möglichst kleine, flache Streuwinkel abzudecken, ohne den Charakter der Dunkelfeldbeleuchtung zu verlieren, wird die zentrale Abschattung bzw. Abdunkelung der Leuchtfläche insbesondere gerade so groß gewählt, dass ihre Abbildung durch das Spiegelsystem die Eintrittspupille der Aufnahmeeinrichtung sicher vorständig abdeckt. Hierbei kann, falls ein Objektiv verwendet wird und sofern notwendig, sogar der Grad der Abblendung des Objektivs mit berücksichtigt werden. Der Bereich hin zu großen Streuwinkel ist dann alleine limitiert durch die Größe des oder der Spiegel des Spiegelsystems (also der effektiven Größe des Kollimators) und der Leuchtfläche.

Die Abbildung des so gestalteten Lichtmusters (also der Kombination aus hellen und abgedunkelten Bereichen) führt dazu, dass bei der Hellfeldbeleuchtung das durch die Aufnahmeeinrichtung erfasste Bild gleichmäßig ausgeleuchtet wird, aber ansonsten keinerlei Struktur (insbesondere keine von dem Lichtmuster herrührenden Strukturen) aufweist. Bei der Dunkelfeldbeleuchtung gelangt dagegen kein Licht in die Kamera, wodurch das durch die Aufnahmeeinrichtung erfasste Bild unabhängig von der Intensität des Lichts dunkel erscheint.

Dies gilt jedoch nur solange sich kein diesen Strahlengang störendes Material zwischen Spiegelsystem und Aufnahmeeinrichtung befindet. Eine ideal homogene Glasscheibe ohne Verschmutzungen oder eine homogene Flüssigkeitsschicht bleiben unsichtbar, auch wenn sie im Objekt-seitigen Fokus der Aufnahmeeinrichtung angeordnet sind. Ist dagegen eine "Störung" vorhanden, beispielsweise ein Defekt (z.B. Riss, Schliere, etc.) im Glas oder ein Partikel in der Flüssigkeit, so wird das Licht an dieser Stelle umgelenkt bzw. abgelenkt (d.h. gebrochen, reflektiert und/oder gestreut). Bei einer Hellfeldbeleuchtung macht sich diese Ablenkung in einem Hell-Dunkel-Muster oder einem dunklen "Schattenwurf" im Bild der Aufnahmeeinrichtung bemerkbar. Bei einer Dunkelfeldbeleuchtung wird dagegen Licht, welches normalerweise die Eintrittspupille verfehlen würde, durch die Störung in die Eintrittspupille abgelenkt, so dass die Störung im Bild als aufgehellte Fläche sichtbar wird.

Idealerweise wird die Aufnahmeeinrichtung (bzw. bei Verwendung eines Objektivs das Objektiv) auf den Behälter fokussiert. Auf diese Weise werden etwaige Störungen an der Oberfläche und/oder in einer Flüssigkeit des Behälters scharf abgebildet und auch kleinste Partikel oder Materialfehler sichtbar gemacht.

Bei Anwendung einer Dunkelfeldbeleuchtung ist es für viele Anwendungen entscheidend, dass Defekte im Behälter oder Partikel in der Flüssigkeit aus möglichst unterschiedlichen Richtungen beleuchtet werden. Insbesondere unregelmäßig geformte Partikel (z.B. Glaspartikel) streuen oder reflektieren das auftreffende Licht nur in wenige Richtungen. Trifft nur aus einer einzigen Richtung Licht auf den Partikel, so hängt es von dessen Ausrichtung zur optischen Achse der Aufnahmeeinrichtung ab, ob das durch den Partikel abgelenkte Licht in die Eintrittspupille der Aufnahmeeinrichtung gelangt. Die Wahrscheinlichkeit ist daher groß, dass solche Partikel nicht auf jeder Aufnahme einer Bildserie verfolgt werden können und es daher zu Fehlergebnissen kommt. Fällt das Licht dagegen aus unterschiedlichen Richtungen auf den Behälter ein, sind die Partikel durchgehend nachweisbar. Ähnlich verhält es sich bei Glasfehlern (z.B. einem lokalen Glasbruch). Auch hier entscheidet die Lage des Fehlers, wieviel Licht in welche Richtung reflektiert oder abgelenkt wird.

Um alle Seiten des Behälters nach Materialfehlern absuchen zu können, können bei der Suche nach Materialfehlern auch mehrere Aufnahmen des Behälters erstellt und der Behälter hierbei gedreht ("abgerollt") werden.

Die Forderung, dass der Behälter aus möglichst vielen unterschiedlichen Richtungen mit Licht der Beleuchtungseinheit bestrahlt wird, kann durch eine ausreichend große Leuchtfläche bzw. ein ausreichend großes Lichtmuster und ein ausreichend groß dimensioniertes Spiegelsystem erfüllt werden.

In einer weiteren Ausführungsform ist vorgesehen, dass der Behälter mittels einer Transporteinrichtung, beispielsweise einem Transportband oder drehbaren Halter, relativ zur Vorrichtung bewegbar ist. Die Bewegung des Behälters durch die erfindungsgemäße Vorrichtung bzw. durch deren Bildfeld kann entlang einer gekrümmten Bahn (z.B. Kreisbahn) oder einer linearen Bahn und entweder kontinuierlich oder im Taktbetrieb erfolgen. Die Beleuchtungseinrichtung, das Spiegelsystem und die Aufnahmeeinrichtung sind dabei vorzugsweise so angeordnet, dass die optische Achse der Aufnahmeeinrichtung im Wesentlichen senkrecht zur Bewegungsrichtung des Behälters ausgerichtet ist und der Behälter entlang eines ausgedehnten Streckenabschnitts der Bewegungsbahn durch die Beleuchtungseinrichtung beleuchtbar und ein Abbild des Behälters von der Aufnahmeeinrichtung erfassbar ist.

Beispielsweise können mehrere Aufnahmen des Behälters an mehreren Positionen des Streckenabschnitts gemacht werden. Ferner kann vorgesehen sein, dass der Behälter auf der Transporteinrichtung, beispielsweise auf einem Drehteller, drehbar gelagert ist, sodass mehrere Aufnahmen aus unterschiedlichen Winkeln bzw. Blickrichtungen gemacht werden können. Vorzugsweise steht die Bewegungsrichtung des Behälters senkrecht zur optischen Achse der Aufnahmeeinrichtung und zur Längsachse des Behälters.

In einer weiteren Ausführungsform ist vorgesehen, dass das Lichtmuster mindestens einen dunklen Bereich aufweist, welcher kein Licht ausstrahlt bzw. von welchem kein Licht ausgeht. Bei einer Dunkelfeldbeleuchtung ist der abgedunkelte Bereich vorzugsweise der zentrale Bereich der Leuchtfläche, sodass ohne "Störung" im Strahlengang kein Licht in die Eintrittspupille gelangt. Bei einer Hellfeldbeleuchtung wird hingegen vorzugsweise nur der zentrale Bereich der Leuchtfläche zur Bestrahlung genutzt, während die restliche Fläche der Leuchtfläche abgedunkelt ist. Das Lichtmuster, das bei der Dunkelfeldbeleuchtung verwendet wird, kann insbesondere zu dem Lichtmuster der Hellfeldbeleuchtung invertiert sein. Der dunkle Bereich kann über eine entsprechende Ansteuerung bzw. Programmierung der Lichtquellen der Leuchtfläche und/oder über die Verwendung einer entsprechenden Blende erzeugt werden.

In einer weiteren Ausführungsform ist vorgesehen, dass die Beleuchtungseinheit eingerichtet ist, ein Lichtmuster mit mindestens zwei Bereichen zu erzeugen, welche Licht mit unterschiedlichen Wellenlängen ausstrahlen. So kann beispielsweise vorgesehen sein, dass der für eine Dunkelfeldbeleuchtung normalerweise verwendete Bereich Licht mit einer Wellenlänge und der normalerweise für eine Hellfeldbeleuchtung verwendete Bereich Licht mit einer anderen Wellenlänge ausstrahlt. Wiederum kann der Begriff Wellenlänge für einen Wellenlängenbereich stehen. Durch Trennung der unterschiedlichen Wellenlängen bzw. durch entsprechende Verarbeitung der gemessenen Signale bzw. aufgenommenen Bilder können die Anteile der Hellfeld- und Dunkelfeldbeleuchtung voneinander getrennt und separat bewertet werden. Hierfür können Polarisationsfilter zum Einsatz kommen. Eine solche kombinierte Beleuchtung mit mehreren spektral kodierten Bereichen kann beispielsweise für die Detektion von Luftblasen in der Flüssigkeitssäule des Behälters verwendet werden.

In einer weiteren Ausführungsform ist vorgesehen, dass die räumliche Anordnung und/oder die Lichtintensitäten und/oder die Wellenlängen der Bereiche des Lichtmusters variierbar ist. Beispielsweise kann vorgesehen sein, dass unterschiedlich geformte Lichtmuster mittels der Beleuchtungseinheit erzeugt werden können, um die Beleuchtung an verschiedene Behälter und/oder verschiedene Behälterpositionen anzupassen. Auch ist es möglich, über eine Invertierung des Lichtmusters (d.h. die hellen Bereiche werden abgedunkelt und umgekehrt) zwischen einer Hellfeld- und einer Dunkelfeldbeleuchtung zu wechseln.

In einer weiteren Ausführungsform ist vorgesehen, dass das Licht der Beleuchtungseinheit nicht parallel auf der Behälteroberfläche bzw. auf den Behälter auftrifft, wobei das Lichtmuster nicht auf der Behälteroberfläche bzw. den Behälter abgebildet wird. Das Licht der Leuchtfläche trifft also nicht bereits kollimiert auf das Spiegelsystem, sondern wird erst durch dieses kollimiert und auf die Ebene der Eintrittspupille abgebildet. Dies führt dazu, dass der im Strahlengang hinter dem Spiegelsystem angeordnete Behälter aus verschiedenen Richtungen beleuchtet und auch - bei entsprechend großer Dimensionierung der Spiegel und der Leuchtfläche - an verschiedenen Positionen einer Bewegungsbahn durch das Bildfeld gleichmäßig ausgeleuchtet wird. Durch die Realisierung relativ großer Beleuchtungswinkel für jeden Punkt des Behälters wird eine möglichst hohe Lichtstreuung durch Partikel und Glasfehler in Richtung Aufnahmeeinrichtung erreicht.

In einer weiteren Ausführungsform ist vorgesehen, dass die Leuchtfläche eine LED-Matrix mit vorzugsweise individuell ansteuerbaren LEDs ist. Insbesondere kann es sich um eine Platine mit LED-Matrix und eine nachgeschaltete Diffusor-Scheibe handeln. Je nach Anwendung können hierbei weiße, farbige bzw. monochrome oder RGB-LEDs zum Einsatz kommen. Mit monochromen LEDs lassen sich durch eine individuelle Ansteuerung der einzelnen LEDs auch Hell-Dunkel-Muster erzeugen. Mit RGB-LEDs können zusätzlich auch Farbmuster oder Farbverläufe erzeugt werden, wobei in diesem Fall vorzugsweise eine Farbkamera zum Erfassen der Bilder zum Einsatz kommt. Da man hierbei typischerweise unpolarisiertes Licht erhält, lässt bei Bedarf sich durch Nachschalten eines Polarisationsfilters beispielsweise eine lineare Polarisation mit beliebig wählbarer Polarisationsrichtung erzeugen. Bei individuell ansteuerbaren LEDs kann das Lichtmuster durch eine direkte Anzeige eines entsprechenden Musters bzw. Bildes erzeugt werden.

Die Leuchtfläche kann auch durch einen TFT-Bildschirm, beispielsweise einen LED-TFT- oder LCD-TFT-Bildschirm, realisiert werden. Das Lichtmuster kann ebenfalls durch eine direkte Anzeige eines entsprechenden Musters bzw. Bildes erzeugt werden. Da man bei einem TFT-Bildschirm in der Regel linear polarisiertes Licht erhält, könnte ein Polarisationsfilter, insbesondere ein Zirkular-Polarisationsfilter, verwendet werden, um die Polarisation der Beleuchtung zu verändern.

In einer weiteren Ausführungsform ist vorgesehen, dass mindestens eine Blende zur Erzeugung des Lichtmusters vorgesehen ist, welche zwischen Leuchtfläche und Spiegelsystem angeordnet ist. Dies bietet sich insbesondere bei einer Leuchtfläche mit nicht individuell ansteuerbaren Lichtelementen bzw. -quellen an, beispielsweise bei einer LED-Matrix ohne individuelle LED-Ansteuerung. Die dunklen Bereiche des Lichtmusters werden dann durch das Vorsehen einer entsprechenden Blende oder einer Kombination mehrerer Blenden erreicht. Der Vorteil liegt hierbei in den niedrigeren Kosten für die Leuchtfläche sowie im höheren Kontrast und einer höheren erreichbaren Leuchtdichte. Die Blende kann für unterschiedliche Behälter anpassbar oder auswechselbar sein, um unterschiedliche Lichtmuster zu erzeugen. Die Blende kann in der Form mechanisch oder elektronisch anpassbar bzw. veränderbar sein. Ferner kann ein zusätzliches unabhängiges TFT-Panel vor einem Diffusor zwischen LED-Leuchtfläche und dem Spiegelsystem platziert werden, sodass das TFT-Panel im Licht-seitigen Fokus des Spiegelsystems liegt und das Lichtmuster durch eine entsprechende Programmierung erreicht wird.

Vorteilhafterweise kann das Lichtmuster sowohl in Hinblick auf die Intensität als auch auf die Farbe bzw. Wellenlänge zeitlich variierbar sein, sei es durch Blenden, durch die individuelle Ansteuerung der LEDs einer LED-Matrix, durch Anzeige geeigneter Bilder auf dem TFT-Bildschirm oder durch eine unabhängige Ansteuerung eines oder mehrerer zusätzlicher TFT-Panel.

In einer weiteren Ausführungsform ist vorgesehen, dass ein Bereich des Lichtmusters als Streifen, insbesondere als bogenförmiger bzw. gekrümmter Streifen, ausgebildet ist, welcher vorzugsweise symmetrisch zur optischen Achse der Aufnahmeeinrichtung ausgerichtet ist. Insbesondere ist der Streifen spiegelsymmetrisch zur Ebene, welche durch die optische Achse der Aufnahmevorrichtung und der durch das Spiegelsystem abgelenkten optischen Achse aufgespannt wird. Bei einer Dunkelfeldbeleuchtung ist der Streifen insbesondere dunkel bzw. abgedunkelt, während die Bereiche außerhalb des Streifens beleuchtet bzw. nicht abgedunkelt sind. Bei einer Hellfeldbeleuchtung ist es insbesondere umgekehrt, sodass nur Licht des Streifens zur Beleuchtung verwendet wird und die restlichen Bereiche dunkel bzw. abgedunkelt sind. Bei einem bogenförmigen Streifen kann sich das im obigen Sinne definierte Zentrum der Leuchtfläche in dem bogenförmigen Bereich befinden, insbesondere an dessen Scheitelpunkt. Bei einem bewegten Behälter ist der Streifen insbesondere in Richtung der Behälterbewegung symmetrisch zur optischen Achse der Aufnahmeeinrichtung ausgerichtet.

Die vorherigen Ausführungen zur Hellfeld- und Dunkelfeldbeleuchtung betreffen Behälter, die den Strahlengang der Beleuchtung nur wenig beeinflussen. Dies gilt eingeschränkt für leere Behälter oder leere Behälterbereiche (z.B. oberhalb des Füllstandes). Bei der Inspektion von Medikamentenbehältern soll beispielsweise sowohl die Wandung der Behälter als auch deren Inhalt, insbesondere eine ganz oder teilweise transparente (eventuell farbige) Flüssigkeit, untersucht werden. Die Flüssigkeitssäule in den zylindrischen Behältern besitzt eine starke Brechkraft. Aus diesem Grund muss bei befüllten Behältern die Leuchtfläche bzw. das Lichtmuster modifiziert werden.

Ein mit Flüssigkeit gefüllter Behälter stellt eine Zylinderlinse dar. Diese "Behälter-Linse" sorgt dafür, dass Licht einer kollimierten (nicht diffusen) Lichtquelle nur in einem schmalen Streifen in der Mitte des Behälters - parallel zur Behälterachse - zur Aufnahmeeinrichtung gelangt. Die Randbereiche des Behälters werden aus Sicht der Aufnahmeeinrichtung nicht durchleuchtet.

Durch eine Anpassung des Lichtmusters kann eine Hellfeldbeleuchtung mit wesentlich verbesserter Ausleuchtung erreicht werden. Hierzu wird vorteilhafterweise anstatt der zuvor beschriebenen zentralen Leuchtfläche ein geeignet geformter Leuchtstreifen (bzw. bei der Dunkelfeldbeleuchtung ein abgedunkelter Streifen) verwendet, der im Wesentlichen über die gesamte Breite der Leuchtfläche reicht. Die optimale Form des Streifens kann z.B. durch "Rückwärts-Rechnung" bestimmt werden, indem die Eintrittspupille als "Lichtquelle" angesetzt wird und Ihre Abbildung durch den Behälter über das Spiegelsystem auf die Leuchtfläche der Beleuchtungseinheit berechnet wird. Bei einem 1-Spiegelsystem mit einer 90°-Strahlumlenkung erhält man beispielsweise eine bogenförmige Struktur für den Streifen.

Um die volle Ausleuchtung zu erreichen, muss der Spiegel groß genug gewählt werden. Für das Auffinden von Glasfehlern (z.B. lokalen Glasrissen) ist die vergrößerte Leuchtfläche von Vorteil. Sie sorgt dafür, dass die Defekte aus mehreren Richtungen bestrahlt und somit sicher erkannt werden.

Diese Anpassung des Lichtmusters gilt in ähnlicher Weise für die DunkelfeldBeleuchtung. Bei einer zentralen kreisförmigen Abschattung bzw. Abdunkelung wird durch die Behälter-Zylinderlinse seitlich eintreffendes Licht durch die Flüssigkeitssäule in Richtung Aufnahmeeinrichtung gebrochen, sodass die Randbereiche hell erscheinen. Wird das oben beschriebene Lichtmuster mit dem bogenförmigen Streifen der Hellfeldbeleuchtung invertiert, d.h. nur der bogenförmige Bereich abgeblendet bzw. abgedunkelt, erscheint die gesamte Behälterfläche dunkel. Da die abgeblendete Fläche idealerweise immer noch klein ist im Vergleich zur gesamten Leuchtfläche, stellt diese zusätzliche Abblendung kaum eine Einschränkung der Lichtwirkung dar. Immer noch sorgt die große verbliebene Leuchtfläche dafür, dass Partikel in der Flüssigkeit aus allen möglichen Richtung beleuchtet werden, sodass auch bei sehr irregulären Partikeloberflächen (z.B. Glaspartikel und Fasern) die Wahrscheinlichkeit sehr groß ist, dass zu jeder Zeit Licht von einem Partikel auch in Richtung Aufnahmeeinrichtung gestreut wird und der Partikel im Bild, bei gleichzeitig hohem Hell-Dunkel-Kontrast, hell aufleuchtet. Gleiches gilt auch für Glas-Risse, deren Sichtbarkeit ebenfalls stark von der Einfallsrichtung des Lichtes abhängen kann. Man erhält somit eine für mit Flüssigkeit gefüllte zylindrische Behälter optimierte Dunkelfeldbeleuchtung.

Werden wie in einer Inspektionsmaschine die Behälter senkrecht zur optischen Achse der Aufnahmeeinrichtung verfahren, so ändert sich das ideale Lichtmuster (d.h. die Form und Anordnung der hellen und abgedunkelten Flächen) nur wenig. Die geringen Verschiebungen können berücksichtigt werden, indem die idealen Lichtmuster der unterschiedlichen Behälterpositionen für den relevanten Verfahrbereich des Behälters zu einer gemeinsamen Fläche, d.h. zu einem gemeinsamen, entsprechend verbreiterten bzw. geformten streifenförmigen Bereich, zusammengefasst werden. Im Falle einer Hellfeldbeleuchtung sind dies die hellen Bereiche, im Fall der Dunkelfeldbeleuchtung sind es die dunklen Flächen.

Vorzugsweise kann beim Einsatz einer programmierbaren Leuchtfläche (z.B. LCD- oder LED-Bildschirm) die Fläche für jede Behälterposition, d.h. für jede einzelne Aufnahme, angepasst werden. Dies kann z.B. über ein separates Triggersignal für das Licht ("Strobe-Signal") gesteuert werden.

Insbesondere sind das Spiegelsystem und die Leuchtfläche ausreichend groß dimensioniert, sodass im gesamten Verfahrbereich des Behälters eine ausreichende Ausleuchtung gewährleistet ist. Somit ergibt sich aus der Kombination der oben beschriebenen Spiegeloptik und des auf den Behälter abgestimmten Lichtmusters eine Inspektionsvorrichtung mit optimalen Eigenschaften nicht nur für eine feste Behälterposition, sondern auch für Behälter, die in einer Inspektionsmaschine kontinuierlich weiterbewegt werden. Auch wenn zeitlich versetzt mehrere Aufnahmen für die automatische Inspektion notwendig sind, ändern sich aus Sicht der Aufnahmeeinrichtung die Beleuchtungsverhältnisse nur unbedeutend.

Selbstverständlich ist eine Optimierung des Lichtmusters, die sich direkt am Inspektionsergebnis orientiert, jederzeit möglich. Theoretische Berechnungen und Simulationen wie die oben beschriebene "Rückwärts-Rechnung" liefern in der Regel einen ersten Ansatz. So können z.B. Einflüsse wie die Material-Qualität der Behälter berücksichtigt werden (z.B. Unterschiede zwischen Röhrenglas und Hüttenglas - Hüttengläser zeigen wesentlich mehr und deutlicher ausgebildete Schlieren; daher könnten bei Röhrenglas höhere Kontraste "eingestellt" werden).

Die Methode der genauen Anpassung des Lichtmusters arbeitet so sensibel, dass auch die Ausleuchtung der Radien im Bereich der Behälterböden optimiert werden kann, was nachweislich zu einer Verbesserung der Inspektionsresultate führt. Hierzu werden die theoretisch durch Rückwärts-Rechnung ermittelten und kombinierten Lichtmuster systematisch leicht variiert und so sukzessive weiter optimiert.

Für sehr anspruchsvolle Anwendungen ist auch die schnelle zeitliche Anpassung des Lichtmusters denkbar. Dies ist insbesondere von Bedeutung, wenn geringfügige Variationen des optimalen Lichtmusters in Bezug auf die Behälterposition im Verfahrbereich ausgeglichen werden sollen. Aber auch die Anwendung unterschiedlicher Lichtmuster im Rahmen einer Inspektion eines Behältertyps oder die Anpassung an unterschiedliche Behälter in einem gemeinsamen Inspektionsprozess ist so möglich.

Für spezielle Anwendungen (z.B. Luftblasenunterscheidung) können die einzelnen Bereiche des Lichtmusters auch farbig ausgeführt sein, d.h. Licht unterschiedlicher Wellenlängen aussenden. Hierzu sei ausdrücklich auf die Offenlegungsschrift EP 3 312 592 A1 verwiesen. So kann z.B. eine Hellfeldbeleuchtung einer Farbe mit einer Dunkelfeldbeleuchtung einer oder mehrerer anderer Farben in der Leuchtfläche bzw. dem Lichtmuster kombiniert werden.

Für andere Anwendungen kann das Lichtmuster vorzugsweise beliebig variiert werden. Auch kontinuierliche Helligkeits- und/oder Farbverläufe sind denkbar. Auch die Spiegelform kann an spezielle Anwendungen angepasst werden. Ferner können bei Verwendung von Bildschirmen oder LED-Flächenlichtern mit einzeln ansteuerbaren RGB-LEDs als Leuchtfläche die Konturen und Farben der einzelnen Bereiche des Lichtmusters frei angepasst werden.

Zusätzlich erhöht das in der erfindungsgemäßen Vorrichtung als Kollimator eingesetzte Spiegelsystem auf Grund seiner Licht-sammelnden Eigenschaft auch allgemein die Lichtausbeute verglichen z.B. mit einem rein diffusen Hintergrundlicht, sodass auch Leuchtflächen bzw. Lichtquellen mit geringerer Leuchtdichte zum Einsatz kommen können, was die Kosten reduziert.

In einer weiteren Ausführungsform ist vorgesehen, dass ein Polarisationsfilter vorgesehen ist, mittels welchem die Polarisation des von der Beleuchtungseinheit ausgestrahlten Lichts veränderbar ist. Dabei kann es sich um einen Linear- oder Zirkularpolarisationsfilter handeln. Es können auch unterschiedliche Polarisationsfilter für unterschiedliche Bereiche des Lichtmusters vorgesehen sein.

In einer weiteren Ausführungsform ist vorgesehen, dass die Aufnahmeeinrichtung eine Kamera und vorzugsweise ein zwischen Behälter und Kamera angeordnetes Objektiv umfasst. Die Eintrittspupille der Aufnahmeeinrichtung ist dann die Eintrittspupille des Objektivs.

In einer weiteren Ausführungsform ist vorgesehen, dass der Behälter zylinderförmig und ganz oder teilweise transparent ist, wobei der Behälter vorzugsweise eine Spritze, ein Vial (d.h. Injektionsfläschchen), eine Ampulle, Karpule oder Cartridge ist. Der Behälter kann mit einer durchsichtigen bzw. transparenten oder einer leicht trüben bzw. teilweise transparenten Flüssigkeit gefüllt sein, solange eine Durchleuchtung des Behälters und somit eine Inspektion im Transmissions-Modus möglich ist. Die Flüssigkeit kann darüber hinaus farbig sein.

Neben der Inspektion von leeren oder mit einer Flüssigkeit gefüllten Behältern eignet sich die erfindungsgemäße Vorrichtung auch zur Inspektion von bis zu einer bestimmten Höhe mit einem beliebigen, beispielsweise festen, Inhalt gefüllten Behälter. Oberhalb der Füllhöhe entspricht die Inspektion dann der Inspektion eines leeren Behälters. Beispielsweise ist vorstellbar, dass die erfindungsgemäße Vorrichtung zur Inspektion von Lyophilisat-Produkten eingesetzt wird, welche bis zu einer bestimmten Füllhöhe mit einer gefriergetrockneten Substanz gefüllt sind.

Weitere Merkmale, Einzelheiten und Vorteile der Erfindung ergeben sich aus den nachfolgend anhand der Figuren erläuterten Ausführungsbeispielen. Es zeigen:
- Figur 1:: ein Ausführungsbeispiel der erfindungsgemäßen Vorrichtung in einer schematischen Seitenansicht;
- Figur 2a:: den Strahlenverlauf zweier Lichtpunkte der Leuchtfläche durch einen in der Mitte des Bildfeldes positionierten leeren Behälter bei einer Dunkelfeldbeleuchtung in einer schematischen Draufsicht;
- Figur 2b:: den Strahlenverlauf zweier Lichtpunkte der Leuchtfläche durch einen außerhalb der Mitte des Bildfeldes positionierten leeren Behälter in der Ansicht gemäß Figur 2a;
- Figur 3a:: den Verlauf der Hauptstrahlen mehrerer Lichtpunkte der Leuchtfläche durch einen in der Mitte des Bildfeldes positionierten, mit Flüssigkeit gefüllten Behälter bei einer Hellfeldbeleuchtung in einer schematischen Draufsicht;
- Figur 3b:: den Verlauf der Hauptstrahlen mehrerer Lichtpunkte der Leuchtfläche durch einen außerhalb der Mitte des Bildfeldes positionierten, mit Flüssigkeit gefüllten Behälter in der Ansicht gemäß Figur 3a;
- Figuren 4a-c:: drei Ausführungsbeispiele von Lichtmustern für die Beleuchtung des Behälters; und
- Figuren 5a-f:: Aufnahmen eines mit Wasser gefüllten Glasbehälters (linke Spalte) bei einer Hellfeldbeleuchtung mit unterschiedlichen Lichtmustern (rechte Spalte).

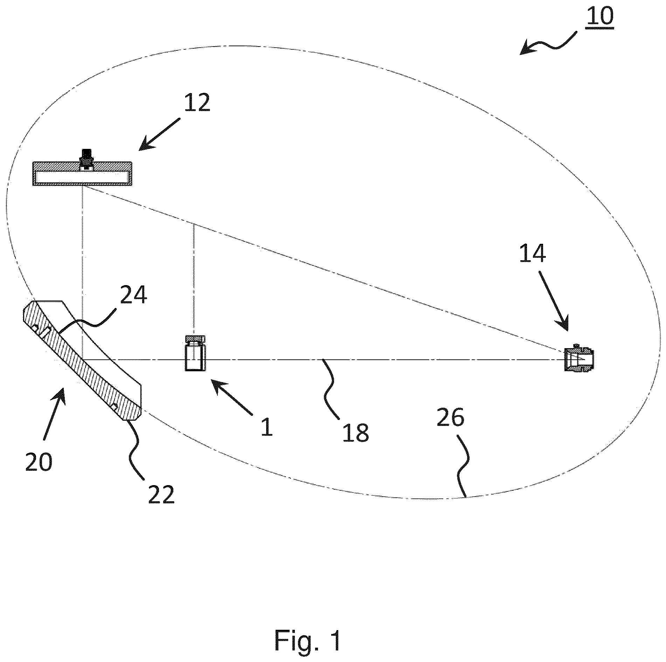

In der Figur 1 ist ein Ausführungsbeispiel der erfindungsgemäßen Vorrichtung 10 in einer Seitenansicht als Schnitt entlang der Symmetrieebene der Vorrichtung 10 dargestellt. Die Vorrichtung 10 dient der automatisierten Inspektion transparenter, zylindrischer Behälter 1, insbesondere Medikamentenbehälter wie Ampullen, Vials, Spritzen oder Cartridges, die leer oder mit einer ganz oder teilweise transparenten Flüssigkeit gefüllt sein können. Die erfindungsgemäße Vorrichtung 10 eignet sich also explizit zur Inspektion von mit Flüssigkeit gefüllten zylindrischen Behältern 1.

Die Vorrichtung 10 umfasst eine Beleuchtungseinheit 12 mit einer Leuchtfläche 13, welche z.B. durch ein einfaches Hintergrundlicht mit Diffusor realisiert sein kann, ein als Kollimator fungierendes Spiegelsystem 20 mit einem einzigen konkaven Spiegel 22 (1-Spiegelsystem) und eine Aufnahmeeinrichtung 14, welche eine Kamera und ein Objektiv 17 umfasst. Zwischen Spiegel 22 und Aufnahmeeinrichtung 14 befindet sich ein zu inspizierender Behälter 1, welcher hier in der Mitte des Kamerafeldes in der Symmetrieebene der Vorrichtung 10 angeordnet ist. Der Behälter 1 wird durch eine Transporteinrichtung (nicht dargestellt) senkrecht zur Mittelebene z.B. auf einer Kreisbahn, durch das Bildfeld der Kamera bewegt. Die Beleuchtung des Behälters 1 erfolgt im Transmissions-Modus (d.h. Durchlicht-Bestrahlung).

Der Spiegel 22 weist eine konkave, ellipsoide Spiegeloberfläche 24 auf und bildet die Leuchtfläche 13 bzw. das durch die Beleuchtungseinheit 12 erzeugte Lichtmuster 30 auf die Ebene der Eintrittspupille 16 des Objektivs 17 der Aufnahmeeinrichtung 14 ab. Der Ablenkwinkel des Spiegels 22 beträgt 90°, sodass sich ein platzsparender gefalteter Strahlengang ergibt. In der Figur 1 ebenfalls eingezeichnet ist eine Skizze zur Auslegung des die Spiegeloberfläche 24 definierenden Rotationsellipsoids 26. Die Leuchtfläche 13 und die Eintrittspupille 16 des Objektivs 17 befinden sich in den beiden Brennpunkten des Ellipsoids 26. Die eingezeichneten Linien kennzeichnen das den Ellipsoid-Spiegel 22 erzeugende Ellipsoid 26 mit der Verbindungslinie der Brennpunkte (= Rotationsachse des Ellipsoids 26), die optische Achse 18 der Kameraoptik, ihre 90°-Umlenkung in Richtung Beleuchtungseinheit 12, sowie die Position des Behälters 1, wenn dieser die Symmetrieebene der Vorrichtung 10 passiert.

Je nach Form des Lichtmusters 30 lässt sich mit der Beleuchtungseinheit 12 der erfindungsgemäßen Vorrichtung eine Dunkelfeld- oder eine Hellfeldbeleuchtung realisieren. Das Lichtmuster 30, d.h. das flächige Muster aus hellen und dunklen Bereichen, lässt sich beispielsweise durch eine Leuchtfläche 13 mit entsprechenden Blenden 11 oder mit einer programmierbaren Leuchtfläche (z.B. LCD- oder LED-Bildschirm) realisieren.

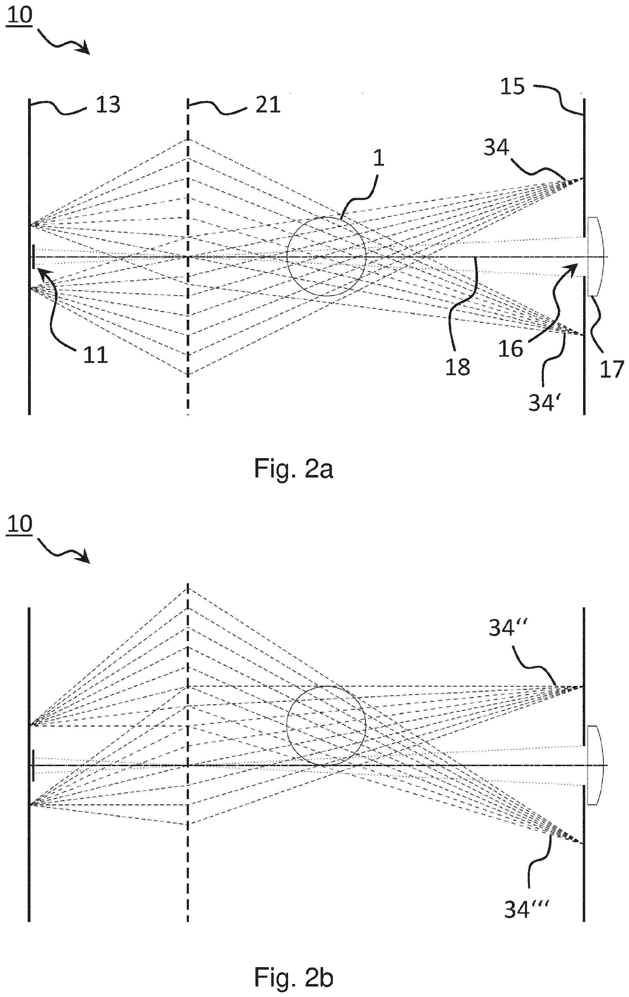

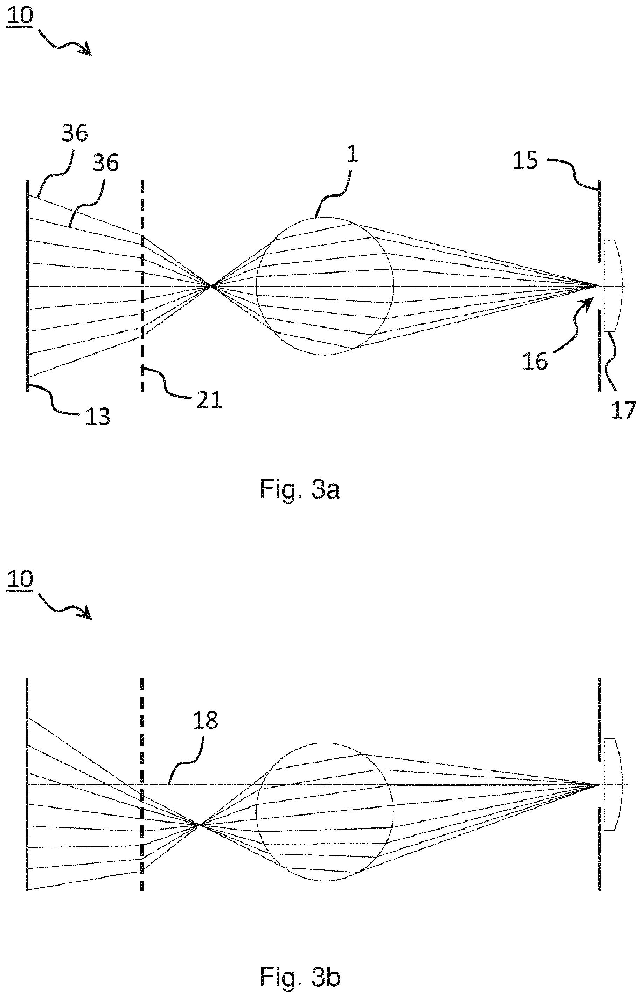

Die Figuren 2a-b zeigen von oben (d.h. senkrecht zur Behälterachse) schematisch den Strahlenverlauf zweier einen leeren Behälter 1 vollständig bestrahlender Strahlfächer 34 ausgehend von zwei exemplarischen Lichtpunkten der Leuchtfläche 13. Die linke Linie stellt die Leuchtfläche 13 dar, in deren Mitte bzw. zentralen Bereich eine Blende 11 für die Dunkelfeldbeleuchtung zwischen Leuchtfläche 13 und Spiegel 22 angeordnet ist. Die Hauptebene des Ellipsoid-Spiegels 22 ist gestrichelt dargestellt, wohingegen der zu inspizierende Behälter 1 als Kreis gekennzeichnet ist. Auf der rechten Seite befindet sich das Objektiv 17 der Aufnahmeeinrichtung 14 mit seiner Eintrittspupille 16. Die in den Figuren 2a-b und 3a-b gezeigte vor dem Objektiv 17 angeordnete Blende 15 repräsentiert schematisch die Eintrittspupille 16 des Objektivs 17. Die Blende 11 zur Abdunkelung des zentralen Bereichs der Leuchtfläche 13 ist mindestens so groß dimensioniert, dass ohne Behälter 1 bzw. mit einem lediglich leeren Behälter 1 im Strahlengang kein Licht in die Eintrittspupille 16 gelangt (der abgedunkelte Bereich zwischen Leuchtfläche 13 und Eintrittspupille 16 bzw. die Abbildung der Blende 11 ist durch die punktierten Linien dargestellt). Die horizontale strich-punktierte Linie 18 stellt die optische Achse des Objektivs 17 dar, welche gleichzeitig in der Symmetrieebene der gesamten Vorrichtung 10 verläuft.

In der Figur 2a befindet sich der Behälter 1 in der Mitte des Kamerafeldes (d.h. die Behälterachse liegt in der Symmetrieebene). In der Figur 2b hat sich der Behälter 1 "nach oben" bewegt. Die Abbildungen zeigen, dass bei ausreichender Größe von Kollimator bzw. Spiegel 22 und Leuchtfläche 13 der Behälter 1 von allen Seiten angestrahlt wird, wobei abhängig von der Behälterposition jeweils andere Strahlfächer 34 von jedem Lichtpunkt der Leuchtfläche 13 wirksam sind. Ein bereits an der Quelle kollimiertes Licht (z.B. LEDs mit eigenen Linsen) könnte daher diese Wirkung nicht erzielen, insbesondere können Sie den Spiegel 22 nicht ersetzen.

Die in den Figuren 2a-b gezeigte Dunkelfeldbeleuchtung kann jedoch bei mit Flüssigkeit gefüllten zylindrischen Behältern 1 nicht zum Einsatz kommen, da die Flüssigkeitssäule in den Behältern 1 eine starke Brechkraft besitzt. Die Annahme eines ungestörten Strahlengangs, wie es in den Figuren 2a-b gezeigt ist, lässt sich in diesem Fall nicht mehr aufrechterhalten. Daher kommt ein modifiziertes Lichtmuster 30 zum Einsatz, bei dem der zentrale Bereich durch einen sich im Wesentlichen über die gesamte Breite der Leuchtfläche 13 erstreckenden bogenförmigen Streifen 32 ersetzt wird.

Die Eigenschaften einer derartigen Beleuchtung werden im Folgenden anhand einer Hellfeldbeleuchtung demonstriert. Die Figuren 3a-b zeigen von oben schematisch den Verlauf der Hauptstrahlen 36 ausgehend von mehreren Lichtpunkten der Leuchtfläche 13 bei einem Behälter 1 mit flüssigem Inhalt. Die Anordnung von Leuchtfläche 13, Spiegel 22, Blende 15 und Objektiv 17 ist die gleiche wie in den Figuren 2a-b. Die Hauptstrahlen kennzeichnen sich hierbei dadurch, dass sie das Zentrum der Eintrittspupille 16 schneiden.

Bei der Beleuchtung handelt es sich um eine Hellfeldbeleuchtung, sodass die durch die Hauptstrahlen 36 angedeuteten Strahlenbündel in die Eintrittspupille 16 der Aufnahmeeinrichtung 14 treffen. Der besseren Übersichtlichkeit halber sind für jeden Lichtpunkt der Leuchtfläche 13 nur die Hauptstrahlen 36 dargestellt, sofern sie den Behälter 1 durchdringen. Wie bei jedem optischen Strahlengang sind die relevanten Strahlbüschel definiert durch die Apertur des Systems, in diesem Fall somit durch die Eintrittspupille 16 des Objektivs 17.

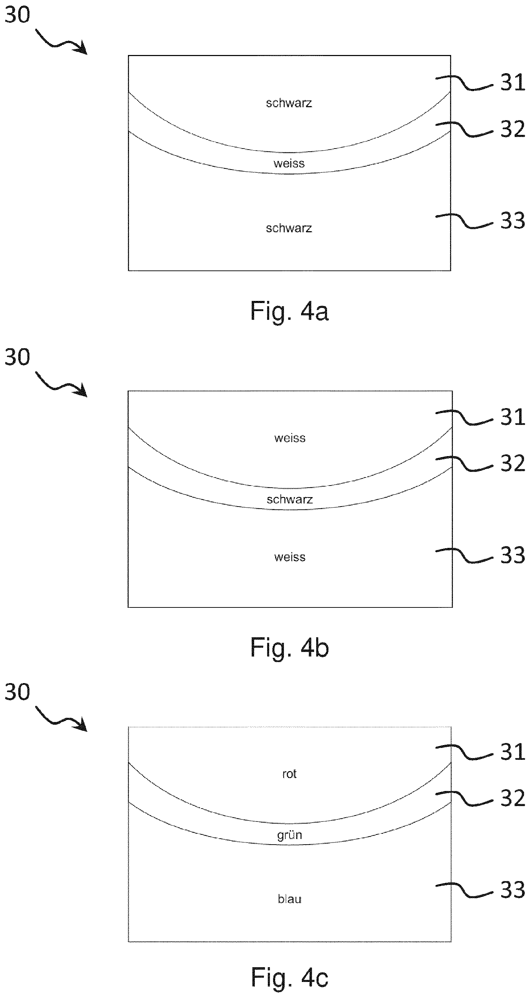

Für die Hellfeldbeleuchtung kommt das in der Figur 4a schematisch gezeigte Lichtmuster 30 zum Einsatz. Anstelle eines zentralen Bereichs zur Beleuchtung wird hier ein sich über die gesamte Breite der Leuchtfläche 13 erstreckender bogenförmigen Streifen 32 für die Hellfeldbeleuchtung eingesetzt, wobei die Bereiche 31, 33 darüber und darunter abgedunkelt sind (entweder durch Blenden oder durch eine entsprechende Programmierung der Leuchtfläche 13 wie zuvor beschrieben).

Die optimale Form des Streifens 32 kann z.B. durch "Rückwärts-Rechnung" bestimmt werden, indem die Eintrittspupille 16 als "Lichtquelle" angesetzt wird und Ihre Abbildung durch den Behälter 1 über den Ellipsoid-Spiegel 22 auf die Leuchtfläche 13 berechnet wird. Bei dem vorliegend verwendeten 1-Spiegelsystem mit einer 90°-Strahlumlenkung erhält man die in der Figur 4a gezeigte bogenförmige Struktur für den Streifen 32. Die gebogene Form ergibt sich bei einem Ellipsoid-Spiegel 22 dadurch, dass als Kollimator ein stark exzentrisches Ellipsoid-Segment 24 verwendet wird, wobei die optische Achse 18 der Aufnahmeeinrichtung 14 und die Halbachse des Ellipsoids 26 auch nicht näherungsweise kollinear verlaufen. Wäre dies der Fall, so wäre der Streifen 32 gerade. Der gebogene Streifen 32 kompensiert durch seine Form quasi die Verzeichnung des stark exzentrischen Ellipsoid-Spiegels 22, sodass dieser aus Sicht der Kamera "gerade" erscheint.

Um die volle Ausleuchtung zu erreichen, ist der Spiegel 22 groß genug gewählt, um ein gewünschtes Bildfeld zu erreichen, beispielsweise ein Bildfeld von 16°. Generell hängt die Größe des oder der Spiegel 22 des Spiegelsystems 20 vom gewünschten Bildfeld, innerhalb dessen die Inspektion erfolgen soll, und von der geforderten Ausleuchtung der Behälter 1 ab (d.h. von deren maximalem Durchmesser und deren Höhe). Da der abgeblendete Bereich 31, 33 der Leuchtfläche 13 immer noch wesentlich kleiner ist als die maximal mögliche Leuchtfläche, die der Spiegel 22 abbilden kann, bleibt der "harte" Charakter der Hellfeldbeleuchtung erhalten (z.B. zum Nachweis von Schlieren). Für das Auffinden von Glasfehlern (z.B. lokalen Glasrissen) ist die vergrößerte Leuchtfläche 13 sogar von Vorteil. Sie sorgt zusätzlich dafür, dass die Defekte aus mehreren Richtungen bestrahlt und somit sicher erkannt werden.

Wird der beleuchtete Behälter 1 senkrecht zur optischen Achse 18 des Objektivs 17 verfahren, so ändert sich das ideale Lichtmuster 30, d.h. die Form des bogenförmigen Streifens 32, nur wenig. Bewegt sich der Behälter 1 beispielsweise aus der optischen Achse 18 (aus Sicht der Kamera) nach rechts hinaus, so erhält man einen nach links verschobenen und/oder verdrehten Streifen 32. Die genaue Form des bogenförmigen Streifens 32 für eine bestimmte Behälterposition hängt von den Distanzen der optischen Komponenten, dem Behälterdurchmesser und dem Brechungsindex der darin enthaltenen Flüssigkeit ab.

Diese geringen Verschiebungen sind in dem in der Figur 4a gezeigten Lichtmuster 30 bereits berücksichtigt, indem die sich für jede Behälterposition ergebenden idealen Streifen 32 für den relevanten Verfahrbereich des Behälters 1 zu einer gemeinsamen Fläche, d.h. zu einem gemeinsamen, entsprechend verbreiterten bzw. geformten streifenförmigen Bereich 32, zusammengefasst wurden. Mit anderen Worten stellt der gezeigte bogenförmige Streifen 32 eine Überlagerung aller idealen Bögen 32 für die gesamte Bewegungsstrecke des Behälters 1 dar. Der Streifen 32 ist ferner spiegelsymmetrisch zur Ebene, welche durch die optische Achse 18 des Objektivs 17 und der durch den Spiegel 22 abgelenkten optischen Achse 18 aufgespannt wird. Somit ist der Behälter 1 an jeder Position innerhalb des Kamerabildfeldes ideal ausgeleuchtet.

Diese Symmetrie des Lichtmusters 30 kann aufgegeben werden, wenn für sehr anspruchsvolle Anwendungen das Lichtmuster 30 zeitlich der Bewegung des Behälters 1 nachgeführt werden soll. Die Abweichungen von der Symmetrie bleiben aber gering; im Wesentlichen wird das Lichtmuster 30, das für die zentrale Position des Behälters 1 optimiert wurde, nur zeitlich verschoben. Eine weitere Optimierung für jede abgelichtete Behälterposition ist natürlich möglich, aber selten notwendig.

Insbesondere ist die erfindungsgemäße Vorrichtung 10 dazu ausgelegt, dass die zuvor beschriebenen Eigenschaften hinsichtlich der gleichmäßigen Ausleuchtung des Behälters 1 für einen Verfahrbereich von bis zu ±50 mm senkrecht zur Symmetrieebene erfüllt sind.

Diese Anpassung des Lichtmusters 30 gilt in gleicher Weise für die Dunkelfeldbeleuchtung. Das entsprechende Lichtmuster 30 für die Dunkelfeldbeleuchtung ist in der Figur 4b gezeigt und entspricht dem invertierten Lichtmuster 30 der Hellfeldbeleuchtung (Figur 4a). Dadurch erscheint die gesamte Behälterfläche an jeder Position innerhalb des Kamerabildfeldes dunkel. Da die abgeblendete Fläche 32 immer noch klein ist im Vergleich zur gesamten Leuchtfläche 13, stellt diese zusätzliche Abblendung kaum eine Einschränkung der Lichtwirkung dar. Immer noch sorgt die große verbliebene Leuchtfläche dafür, dass Partikel in der Flüssigkeit aus allen möglichen Richtung beleuchtet werden, sodass auch bei sehr irregulären Partikeloberflächen (z.B. Glaspartikel und Fasern) die Wahrscheinlichkeit sehr groß ist, dass zu jeder Zeit Licht von einem Partikel auch in die Eintrittspupille 16 gestreut wird und der Partikel im Bild, bei gleichzeitig sehr hohem Hell-Dunkel-Kontrast, hell aufleuchtet. Gleiches gilt auch für Glas-Risse, deren Sichtbarkeit ebenfalls stark von der Einfallsrichtung des Lichtes abhängen kann. Man erhält somit durch das in der Figur 4b gezeigte Lichtmuster 30 eine für mit Flüssigkeit gefüllte zylindrische Behälter 1 optimierte Dunkelfeldbeleuchtung.

In der Figur 3a befindet sich der Behälter 1 in der Mitte des Kamerafeldes (d.h. die Behälterachse liegt in der Symmetrieebene). In der Figur 3b hat sich der Behälter 1 "nach unten"'(d.h. aus Sicht der Kamera nach links) bewegt. Diese Abbildungen zeigen, dass mit einer ausreichend breiten Leuchtfläche 13 und einem ausreichend dimensionierten Kollimator bzw. Spiegelsystem 20 eine sehr gute Ausleuchtung der Flüssigkeitssäule gelingt, trotz der hohen Brechkraft der "Behälter-Zylinderlinse", und zwar auch dann, wenn sich der Behälter 1 aus der Symmetrieebene hinausbewegt.

Die Figur 4c zeigt ein Lichtmuster 30 für eine kombinierte Hell- und Dunkelfeldbeleuchtung, wobei die Bereiche 31 und 33 Licht mit unterschiedlichen Wellenlängen (bzw. Wellenlängenbereichen) aussenden. Der dritte, bogenförmige Bereich 32 sendet eine weitere, zu den Bereichen 31 und 33 unterschiedliche Wellenlänge aus. Beispielsweise sendet der Bereich 31 rotes, der Bereich 32 grünes und der Bereich 33 blaues Licht aus. Hierbei kommt insbesondere eine Farbkamera zur Erfassung eines Farbbildes zum Einsatz. Durch entsprechende spektrale Trennung lassen sich bestimmte Störungen wie beispielsweise Luftblasen in der Flüssigkeit noch besser detektieren. Neben sichtbarem Licht können auch andere Wellenlängen, beispielsweise im UV, Röntgen- oder Infrarotbereich, zum Einsatz kommen.

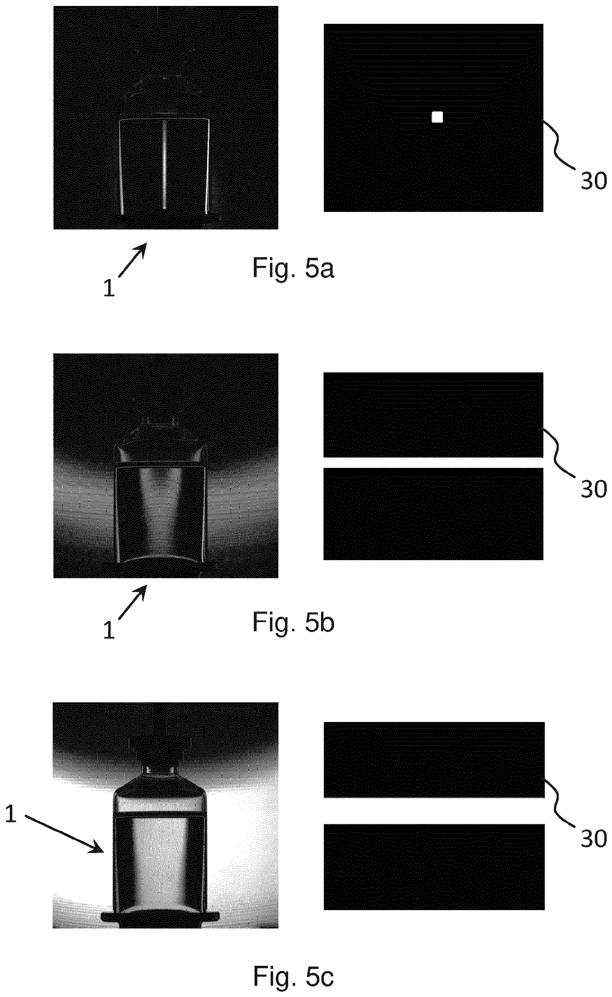

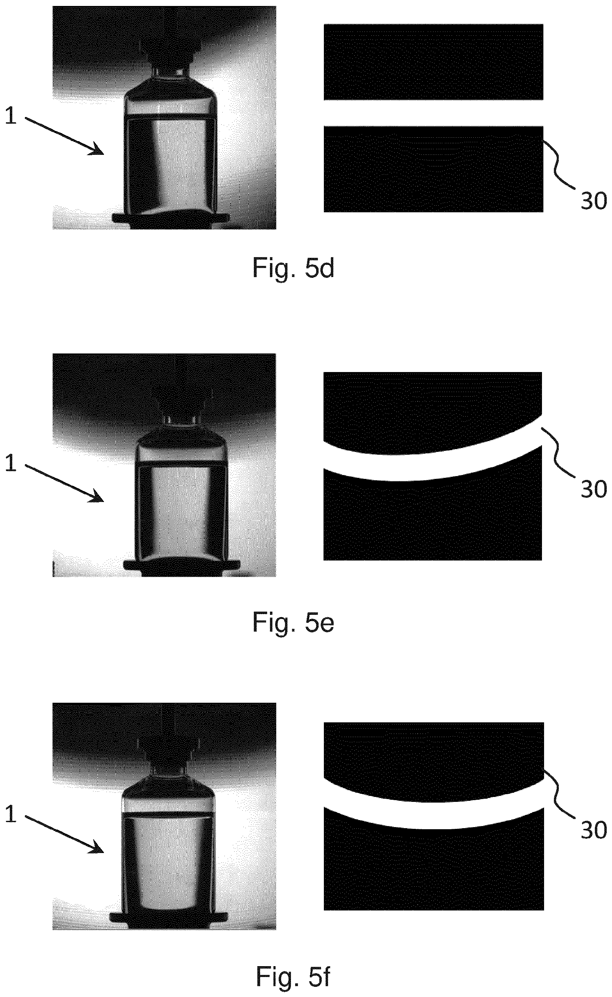

Die Figuren 5a-f zeigen die Durchleuchtung eines mit Wasser gefüllten Behälters 1 (die durch die Aufnahmeeinrichtung 14 aufgenommenen Fotos des Behälters 1 sind in der linken Spalte gezeigt) bei einer Hellfeldbeleuchtung mit unterschiedlichen Lichtmustern 30 (diese sind in der rechten Spalte gezeigt).

Der mit Flüssigkeit gefüllte Behälter 1 stellt eine Zylinderlinse dar, die dafür sorgt, dass Licht einer einzelnen kollimierten (nicht diffusen) Lichtquelle nur in einem schmalen Streifen in der Mitte des Behälters 1 - parallel zur Behälterachse - zur Aufnahmeeinrichtung 14 gelangt. Dies ist in der Figur 5a zu sehen, bei der zur Beleuchtung ein Lichtmuster 30 mit einem kleinen zentral beleuchteten Bereich verwendet wird. Die Randbereiche des Behälters 1 werden aus Sicht der Aufnahmeeinrichtung 12 nicht durchleuchtet (anders ausgedrückt erzeugt die Behälter-Zylinderlinse vertikal ein stark komprimiertes Abbild des Lichtes, welches über die Aufnahmeeinrichtung 12 unscharf abgebildet wird).

Durch eine Anpassung des Lichtmusters 30 kann eine Hellfeldbeleuchtung mit wesentlich verbesserter Ausleuchtung erreicht werden. Wird die kleine zentrale Leuchtfläche durch einen Leuchtstreifen ersetzt, der sich über die gesamte Breite der Leuchtfläche 13 erstreckt, verbessert sich die Ausleuchtung wesentlich (vgl. Figuren 5b-c). Bei einem 1-Spiegelsystem 20 mit einer 90°-Strahlumlenkung wie im vorliegenden Ausführungsbeispiel erhält man das beste Ausleuchtungsergebnis mit dem in den Figuren 5e-f gezeigten (und durch Rück-Rechnung ermittelten) bogenförmigen Lichtmuster 30 wie zuvor beschrieben. In den Figuren 5d und 5e ist der Behälter 1 gegenüber der zentralen optischen Achse 18 aus Sicht der Kamera nach rechts verschoben.

Neben den geringeren Kosten bietet die erfindungsgemäße Vorrichtung eine bessere Inspektionsqualität und eine leichtere Einstellbarkeit bzw. Modifizierbarkeit als vergleichbare Inspektionssysteme.

Die erfindungsgemäße Vorrichtung 10 kann bei vielen Anwendungen zum Einsatz kommen, wobei im Folgenden beispielhaft die Detektion von Partikeln, Schlieren und Glasfehlern beschrieben wird.

Die Erkennung von Fremdpartikeln in der Flüssigkeit der Behälter 1 ist eine der wichtigsten Inspektionen für Pharmaprodukte. Die Anforderungen an die Inspektion (insbesondere bezüglich der Sicherheit bei der Unterscheidung von "Gut"- und "Schlecht"-Produkten) sind sehr hoch und nicht immer erreichbar. Bei der Partikelinspektion wird bevorzugt eine Dunkelfeldbeleuchtung angewandt. Hierbei soll das Bildfeld innerhalb der Flüssigkeitssäule dunkel erscheinen, aber Partikel innerhalb der Flüssigkeit sollen das Licht der eingesetzten Beleuchtung in Richtung Aufnahmeeinrichtung 14 bzw. Objektiv 17 streuen und so im Bild hell aufleuchten.

Die Intensität des von Partikeln in Richtung Objektiv 17 gestreuten Lichts der Beleuchtungseinheit 12 hängt erheblich von der zufälligen Ausrichtung der Partikel im Strahlengang ab. Dies gilt insbesondere für Glaspartikel und Fasern. Um trotzdem unabhängig von der momentanen Ausrichtung zu jedem Zeitpunkt eine ausreichende Helligkeit im Kamerabild zu gewährleisten, ist es notwendig, dass Licht aus möglichst vielen verschiedenen Richtungen, d.h. unter möglichst vielen unterschiedlichen Winkeln auf den Partikel trifft.

Dies ist bei üblicherweise eingesetzten Beleuchtungen oft nicht ausreichend gegeben. Daher sind die Partikel, die sich in der Flüssigkeit bewegen, nicht ständig sichtbar, sodass sie nicht zuverlässig über mehrere Aufnahmen hinweg erkannt werden können (die Behälterinhalte werden vor der Inspektion typischerweise in schnelle Rotation versetzt ("auf-rotiert"), damit sich die Partikel vom Boden des Behälters 1 lösen und sich während der Inspektion in der Flüssigkeit bewegen). Dies kann zu einer Fehlinterpretation und damit zu einem falschen Inspektionsergebnis führen.

Die erfindungsgemäße Vorrichtung 10 mit dem als Kollimator verwendeten Spiegelsystem 20 ist auf Grund der großen erreichbaren Apertur (große Spiegelfläche 24) ideal für die zuvor beschriebene Anforderung, da jeder Punkt im Behälter 1 aus vielen verschiedenen Richtungen / Winkeln angestrahlt wird, unabhängig von der Position des Behälters 1 und ohne das Prinzip der Dunkelfeldbeleuchtung zu verletzen. Dadurch können Partikel (insbesondere in der Flüssigkeit schwer nachweisbare Glaspartikel) über den gesamten Verfahrbereich der Behälter 1 sicher nachgewiesen und in einer Bildserie automatisch verfolgt werden.

Eine vergleichsweise neue Anforderung ist die Erkennung von Schlieren in der Flüssigkeit der Behälter 1, um überprüfen zu können, ob eine optimale Lösung gegeben ist, oder ob es zu Phasentrennungen einzelner Anteile kommt. Bei der Schliereninspektion wird meistens eine Hellfeldbeleuchtung angewandt (wobei im Prinzip auch eine Dunkelfeldbeleuchtung möglich ist). Die Belichtung des Bildes wird so eingestellt, dass das Bildfeld innerhalb der Flüssigkeitssäule im Idealfall gleichmäßig hell erscheint (z.B. mittlerer Grauwert). Auf Grund des Brechungsindex-Unterschieds unterschiedlicher Flüssigkeiten oder Lösungen, machen sich Schlieren durch Hell-Dunkel-Strukturen im Bild bemerkbar. Durch Anpassung des Lichtmusters 30 kann der Kontrast variiert werden. Der große Spiegeldurchmesser garantiert gleiche Bedingungen über einen großen Verfahrbereich der Behälter 1.

Die Erkennung von Glasfehlern soll alle Produkte aussortieren, die auf Grund von Oberflächen- oder Glasfehlern keine sichere Inspektion der Inhalte mehr zulassen, unverkäuflich sind oder gar die Gefahr von Glasbruch oder Kontamination des Inhaltes bergen. Glasfehler - hierzu gehören Kratzer, Einschlüsse, Risse, Abbrüche und Inhomogenitäten im Material - lassen sich mit einer Hellfeld- sowie Dunkelfeldbeleuchtung nachweisen. Die Wirkungsweise ist im Prinzip die gleiche wie bei der Partikel- und Schliereninspektion. Insbesondere die Sichtbarkeit von Rissen kann stark vom Einfallswinkel des Beleuchtungslichtes abhängen (ähnlich wie bei Glaspartikeln). Hier kommt wieder der große Lichtfächer zum Tragen, der mit Hilfe des erfindungsgemäß als Kollimator verwendeten Spiegelsystems 20 erreicht werden kann.

### Bezugszeichenliste:

- 1: Behälter
- 10: Vorrichtung
- 11: Blende
- 12: Beleuchtungseinheit
- 13: Leuchtfläche
- 14: Aufnahmeeinrichtung
- 15: Blende
- 16: Eintrittspupille
- 17: Objektiv
- 18: Optische Achse Objektiv
- 20: Spiegelsystem
- 21: Hauptebene Spiegelsystem
- 22: Konkaver Spiegel
- 24: Spiegeloberfläche
- 26: Ellipsoid
- 30: Lichtmuster
- 31: Bereich des Lichtmusters
- 32: Bereich des Lichtmusters
- 33: Bereich des Lichtmusters
- 34: Strahlfächer
- 36: Hauptstrahl

## Patentansprüche

1. Vorrichtung (10) zur optischen Inspektion eines leeren oder mit Flüssigkeit gefüllten Behälters (1), umfassend eine Beleuchtungseinheit (12) mit einer Leuchtfläche (13) und eine Aufnahmeeinrichtung (14), wobei die Beleuchtungseinheit (12) eingerichtet ist, ein flächiges Lichtmuster (30) bestehend aus mindestens zwei Bereichen (31, 32, 33) unterschiedlicher Lichtintensitäten zu erzeugen und den Behälter (1) mit Licht des Lichtmusters (30) zu bestrahlen, insbesondere zu durchleuchten, und wobei die Aufnahmeeinrichtung (14) eingerichtet ist, eine Abbildung des von der Beleuchtungseinheit (12) bestrahlten Behälters (1) zu erfassen, **dadurch gekennzeichnet, dass** die Vorrichtung (10) ferner ein im Strahlengang zwischen Beleuchtungseinheit (12) und Behälter (1) angeordnetes Spiegelsystem (20) mit mindestens einem konkaven Spiegel (22) umfasst, welches das Lichtmuster (30) auf die Ebene der Eintrittspupille (16) der Aufnahmeeinrichtung (14) abbildet, wobei der konkave Spiegel (22) eine ellipsoide Spiegeloberfläche (24) aufweist und so angeordnet ist, dass einer der Brennpunkte des die Spiegeloberfläche (24) definierenden Ellipsoids (26) auf dem Lichtmuster (30) und der andere Brennpunkt auf der Eintrittspupille (16) der Aufnahmeeinrichtung (14) liegt.

2. Vorrichtung (10) nach Anspruch 1, **dadurch gekennzeichnet, dass** das Spiegelsystem (20) keine Linse umfasst.

3. Vorrichtung (10) nach einem der vorhergehenden Ansprüche, **dadurch gekennzeichnet, dass** der Ablenkwinkel des konkaven Spiegels (22) kleiner als 135°, vorzugsweise kleiner als 100° ist.

4. Vorrichtung (10) nach einem der vorhergehenden Ansprüche, **dadurch gekennzeichnet, dass** mittels der Beleuchtungseinheit (12) eine Hellfeldbeleuchtung und/oder eine Dunkelfeldbeleuchtung und/oder eine kombinierte Hell- und Dunkelfeldbeleuchtung mit unterschiedlichen Wellenlängen für die Hellfeld- und die Dunkelfeldbestrahlung realisierbar ist.

5. Vorrichtung (10) nach einem der vorhergehenden Ansprüche, **dadurch gekennzeichnet, dass** der Behälter (1) mittels einer Transporteinrichtung bewegbar ist, wobei Beleuchtungseinrichtung (12), Spiegelsystem (20) und Aufnahmeeinrichtung (14) vorzugsweise so angeordnet sind, dass die optische Achse (18) der Aufnahmeeinrichtung (14) im Wesentlichen senkrecht zur Bewegungsrichtung des Behälters (1) ausgerichtet ist und der Behälter (1) entlang eines Streckenabschnitts von dessen Bewegungsbahn durch die Beleuchtungseinrichtung (12) beleuchtbar und ein Abbild des Behälters (1) von der Aufnahmeeinrichtung (14) erfassbar ist.

6. Vorrichtung (10) nach einem der vorhergehenden Ansprüche, **dadurch gekennzeichnet, dass** mittels der Beleuchtungseinheit (12) ein Lichtmuster (30) erzeugbar ist, welches mindestens einen dunklen Bereich (31, 32, 33) aufweist, der kein Licht ausstrahlt, und/oder welches mindestens zwei Bereiche (31, 32, 33) aufweist, die Licht mit unterschiedlichen Wellenlängen ausstrahlen.

7. Vorrichtung (10) nach einem der vorhergehenden Ansprüche, **dadurch gekennzeichnet, dass** die räumliche Anordnung und/oder die Lichtintensitäten und/oder die Wellenlängen der Bereiche (31, 32, 33) des Lichtmusters (30) variierbar ist.

8. Vorrichtung (10) nach einem der vorhergehenden Ansprüche, **dadurch gekennzeichnet, dass** das Licht der Beleuchtungseinheit (12) nicht parallel auf der Behälteroberfläche auftrifft, wobei das Lichtmuster (30) nicht auf der Behälteroberfläche abgebildet wird.

9. Vorrichtung (10) nach einem der vorhergehenden Ansprüche, **dadurch gekennzeichnet, dass** die Leuchtfläche (13) ein TFT-Bildschirm oder eine LED-Matrix mit vorzugsweise individuell ansteuerbaren LEDs ist.

10. Vorrichtung (10) nach einem der vorhergehenden Ansprüche, **dadurch gekennzeichnet, dass** mindestens eine Blende (11) zur Erzeugung des Lichtmusters (30) vorgesehen ist, welche zwischen Leuchtfläche (13) und Spiegelsystem (20) angeordnet ist.

11. Vorrichtung (10) nach einem der vorhergehenden Ansprüche, **dadurch gekennzeichnet, dass** ein Bereich (31, 32, 33) des Lichtmusters (30) als insbesondere bogenförmiger Streifen (32) ausgebildet ist, welcher vorzugsweise symmetrisch zur optischen Achse (18) der Aufnahmeeinrichtung (14) ausgerichtet ist.

12. Vorrichtung (10) nach einem der vorhergehenden Ansprüche, **dadurch gekennzeichnet, dass** ein Polarisationsfilter vorgesehen ist, mittels welchem die Polarisation des von der Beleuchtungseinheit (12) ausgestrahlten Lichts veränderbar ist.

13. Vorrichtung (10) nach einem der vorhergehenden Ansprüche, **dadurch gekennzeichnet, dass** die Aufnahmeeinrichtung (14) eine Kamera und vorzugsweise ein zwischen Behälter (1) und Kamera angeordnetes Objektiv (17) umfasst.

14. Vorrichtung (10) nach einem der vorhergehenden Ansprüche, **dadurch gekennzeichnet, dass** der Behälter (1) zylinderförmig und ganz oder teilweise transparent ist, wobei der Behälter (1) vorzugsweise eine Spritze, ein Vial, eine Ampulle oder eine Cartridge ist.

## Claims

1. Device (10) for optically inspecting a container (1) that is empty or filled with liquid, comprising an illumination unit (12) having an illumination surface (13) and a recording apparatus (14), wherein the illumination unit (12) is configured to produce a two-dimensional light pattern (30) consisting of at least two regions (31, 32, 33) of different light intensities and to irradiate the container (1) with light of the light pattern (30), in particular for said light to shine therethrough, and wherein the recording apparatus (14) is configured to detect an image of the container (1) irradiated by the illumination unit (12),
**characterized in that**
the device (10) further comprises a mirror system (20) which is arranged in the beam path between the illumination unit (12) and the container (1) and which comprises at least one concave mirror (22), which images the light pattern (30) onto the plane of the entrance pupil (16) of the recording apparatus (14), wherein the concave mirror (22) comprises an ellipsoid mirror surface (24) and is arranged such that one of the focal points of the ellipsoid (26) defining the mirror surface (24) lies on the light pattern (30) and the other focal point lies on the entrance pupil (16) of the recording apparatus (14).

2. Device (10) according to claim 1, **characterized in that** the mirror system (20) does not comprise a lens.

3. Device (10) according to any one of the preceding claims, **characterized in that** the deflection angle of the concave mirror (22) is less than 135°, preferably less than 100°.

4. Device (10) according to any one of the preceding claims, **characterized in that** bright-field illumination and/or dark-field illumination and/or a combined bright-field and dark-field illumination having different wavelengths for the bright-field and the dark-field irradiation can be produced by means of the illumination unit (12).

5. Device (10) according to any one of the preceding claims, **characterized in that** the container (1) can be moved by means of a transport apparatus, wherein the illumination apparatus (12), the mirror system (20) and the recording apparatus (14) preferably are arranged such that the optical axis (18) of the recording apparatus (14) is oriented substantially perpendicularly to the movement direction of the container (1) and it is possible for the container (1) to be illuminated by the illumination apparatus (12) along a section of the movement path of said container and for an image of the container (1) to be detected by the recording apparatus (14).

6. Device (10) according to any one of the preceding claims, **characterized in that** the illumination unit (12) can produce a light pattern (30) which comprises at least one dark region (31, 32, 33) that does not emit any light and/or which comprises at least two regions (31, 32, 33) that emit light at different wavelengths.

7. Device (10) according to any one of the preceding claims, **characterized in that** the spatial arrangement and/or the light intensities and/or the wavelengths of the regions (31, 32, 33) of the light pattern (30) can be varied.

8. Device (10) according to any one of the preceding claims, **characterized in that** the light from the illumination unit (12) does not impinge upon the container surface in parallel, wherein the light pattern (30) is being imaged on the container surface.

9. Device (10) according to any one of the preceding claims, **characterized in that** the illumination surface (13) is a TFT screen or an LED matrix that preferably comprises individually actuatable LEDs.

10. Device (10) according to any one of the preceding claims, **characterized in that** at least one stop (11), which is arranged between the illumination surface (13) and the mirror system (20), is provided for producing the light pattern (30).

11. Device (10) according to any one of the preceding claims, **characterized in that** a region (31, 32, 33) of the light pattern (30) is in particular designed as a curved strip (32), which is preferably oriented symmetrically to the optical axis (18) of the recording apparatus (14).

12. Device (10) according to any one of the preceding claims, **characterized in that** a polarizing filter is provided, by means of which the polarization of the light emitted by the illumination unit (12) can be modified.

13. Device (10) according to any one of the preceding claims, **characterized in that** the recording apparatus (14) comprises a camera and preferably a lens (17) arranged between the container (1) and the camera.

14. Device (10) according to any one of the preceding claims, **characterized in that** the container (1) is cylindrical and completely or partly transparent, wherein the container (1) preferably is a syringe, a vial, an ampoule or a cartridge.

## Revendications

1. Dispositif (10) pour l'inspection optique d'un récipient (1) vide ou rempli de liquide, comprenant une unité d'éclairage (12) avec une surface lumineuse (13) et un appareil d'enregistrement (14), l'unité d'éclairage (12) étant adaptée pour produire un motif lumineux plan (30) constitué d'au moins deux zones (31, 32, 33) d'intensités lumineuses différentes et pour irradier le récipient (1) avec la lumière du motif lumineux (30), notamment pour le transilluminer, et l'appareil d'enregistrement (14) étant adapté pour acquérir une image du récipient (1) irradié par l'unité d'éclairage (12),
**caractérisé en ce que**
le dispositif (10) comprend en outre un système de miroir (20) agencé dans le trajet des rayons entre l'unité d'éclairage (12) et le récipient (1), avec au moins un miroir concave (22) qui reproduit le motif lumineux (30) sur le plan de la pupille d'entrée (16) de l'appareil d'enregistrement (14),
le miroir concave (22) présentant une surface de miroir ellipsoïdale (24) et étant agencé de telle sorte que l'un des foyers de l'ellipsoïde (26) définissant la surface de miroir (24) se situe sur le motif lumineux (30) et l'autre foyer se situe sur la pupille d'entrée (16) de l'appareil d'enregistrement (14).

2. Dispositif (10) selon la revendication 1, **caractérisé en ce que** le système de miroir (20) ne comprend pas de lentille.

3. Dispositif (10) selon l'une quelconque des revendications précédentes, **caractérisé en ce que** l'angle de déviation du miroir concave (22) est inférieur à 135°, de préférence inférieur à 100°.

4. Dispositif (10) selon l'une quelconque des revendications précédentes, **caractérisé en ce que** l'unité d'éclairage (12) permet de réaliser un éclairage en champ clair et/ou un éclairage en champ sombre et/ou un éclairage combiné en champ clair et en champ sombre avec des longueurs d'onde différentes pour l'irradiation en champ clair et en champ sombre.

5. Dispositif (10) selon l'une quelconque des revendications précédentes, **caractérisé en ce que** le récipient (1) peut être déplacé au moyen d'un appareil de transport, l'appareil d'éclairage (12), le système de miroir (20) et l'appareil d'enregistrement (14) étant de préférence agencés de telle sorte que l'axe optique (18) de l'appareil d'enregistrement (14) est orienté essentiellement perpendiculairement à la direction de déplacement du récipient (1) et le récipient (1) peut être éclairé par l'appareil d'éclairage (12) le long d'une section de sa trajectoire et une image du récipient (1) peut être acquise par l'appareil d'enregistrement (14).

6. Dispositif (10) selon l'une quelconque des revendications précédentes, **caractérisé en ce qu'**un motif lumineux (30) peut être produit au moyen de l'unité d'éclairage (12), lequel présente au moins une zone sombre (31, 32, 33) qui n'émet pas de lumière et/ou lequel présente au moins deux zones (31, 32, 33) qui émettent de la lumière avec des longueurs d'onde différentes.

7. Dispositif (10) selon l'une quelconque des revendications précédentes, **caractérisé en ce que** l'agencement spatial et/ou les intensités lumineuses et/ou les longueurs d'onde des zones (31, 32, 33) du motif lumineux (30) sont variables.

8. Dispositif (10) selon l'une quelconque des revendications précédentes, **caractérisé en ce que** la lumière de l'unité d'éclairage (12) ne frappe pas parallèlement la surface du récipient, le motif lumineux (30) n'étant pas reproduit sur la surface du récipient.

9. Dispositif (10) selon l'une quelconque des revendications précédentes, **caractérisé en ce que** la surface lumineuse (13) est un écran TFT ou une matrice LED avec des LED de préférence commandables individuellement.

10. Dispositif (10) selon l'une quelconque des revendications précédentes, **caractérisé en ce qu'**au moins un diaphragme (11) est prévu pour produire le motif lumineux (30), lequel est agencé entre la surface lumineuse (13) et le système de miroir (20).

11. Dispositif (10) selon l'une quelconque des revendications précédentes, **caractérisé en ce qu'**une zone (31, 32, 33) du motif lumineux (30) est configurée sous la forme d'une bande notamment arquée (32), qui est de préférence orientée symétriquement par rapport à l'axe optique (18) de l'appareil d'enregistrement (14).

12. Dispositif (10) selon l'une quelconque des revendications précédentes, **caractérisé en ce qu'**un filtre polarisant est prévu, au moyen duquel la polarisation de la lumière émise par l'unité d'éclairage (12) peut être modifiée.

13. Dispositif (10) selon l'une quelconque des revendications précédentes, **caractérisé en ce que** l'appareil d'enregistrement (14) comprend une caméra et de préférence un objectif (17) agencé entre le récipient (1) et la caméra.

14. Dispositif (10) selon l'une quelconque des revendications précédentes, **caractérisé en ce que** le récipient (1) est cylindrique et entièrement ou partiellement transparent, le récipient (1) étant de préférence une seringue, un flacon, une ampoule ou une cartouche.
